# EUROPÄISCHE PATENTSCHRIFT

(11) **EP 1 772 758 B1**
(45) Veröffentlichungstag und Bekanntmachung des Hinweises auf die Patenterteilung: **15.03.2017**
(21) Anmeldenummer: 06020821.2
(22) Anmeldetag: 04.10.2006
(51) Int. Cl.: G02B 6/36, G02B 6/38, G02B 6/24, G02B 6/032, H01S 3/067

(54) **Optische Faser mit hohlem Faserkern**
Optical fibre with hollow core
Fibre optique à noyau creux

(30) Priorität: 07.10.2005 DE 202005015728 U
(43) Veröffentlichungstag der Anmeldung: 11.04.2007
(73) Patentinhaber: TRUMPF Laser GmbH, 78713 Schramberg (DE)
(72) Erfinder: Huber, Rudolf, D-78647 Trossingen (DE)
(74) Vertreter: Kohler Schmid Möbus Patentanwälte

(56) Entgegenhaltungen:
- EP-A2- 1 255 137
- WO-A2-2006/045095
- WO-A2-2006/110749
- GB-A- 1 461 400
- GB-A- 2 110 834
- JP-A- 61 069 005
- US-A1- 2004 258 381

## Beschreibung

Die vorliegende Erfindung betrifft eine optische Faser mit hohlem Faserkern.

Eine Hohlfaser (hollow core fiber) hat einen hohlen Faserkem, durch den Licht geführt wird. Dadurch entfallen die Fresnellreflexionen an den Faserenden, und nichtlineare Effekte im Glaskern, wie sie bei herkömmlichen Fasern auftreten, sind stark reduziert. Um die Lichtführung im Faserkem aufrecht zu erhalten, ist der hohle Faserkem in der Regel von weiteren hohlen Bereichen umgeben, deren Durchmesser meist unter dem Durchmesser des Faserkems liegen.

Der zumeist sehr dünne hohle Faserkem mit einem Durchmesser von einigen µm bis einigen 100 µm ist anfällig gegen Verschmutzungen, insbesondere gegen Wasser, das durch Kapillarwirkung in die Faser gezogen wird und ihre Funktion stört oder ganz unterbindet. Zum Schutz der hohlen Bereiche wird an Fasern mit hohlen Bereichen in der Regel ein Teilstück ohne Hohlräume angespleisst, oder das Endstück der Faser wird kollabiert. In beiden Fällen geht der Vorteil der fehlenden Fresnellreflexionen an den Faserendflächen verloren. Eventuell kann auch die Einkopplung von Strahlung in den Faserkem stark gestört sein. EP 1 255 137 offenbart eine optische Faser mit hohlem Faserkern, der zur Führung des in den Faserkern eingekoppelten Lichts von einem Fasermantel umgeben ist, auf dem ein Schutzelement an beiden Faserenden unmittelbar angebracht ist, wobei der hohle Faserkern an beiden Faserenden stirnseitig offen ist, und durch ein zweites Schutzelement staubdicht geschlossen ist, das stirnseitig vor dem Faserende ein Fenster zur Ein- und Auskopplung des durch den hohlen Faserkern zu führenden Lichts aufweist.

Demgegenüber ist es die Aufgabe der vorliegenden Erfindung, eine optische Faser der eingangs genannten Art mit einem anderen Schutz für die Hohlräume auszubilden.

Diese Aufgabe wird erfindungsgemäß durch eine optische Faser gemäß Anspruch 1 gelöst.

Der Abstand zwischen dem Faserende und dem Fenster des Schutzelements liegt vorzugsweise im mm- bis cm-Bereich.

Erfindungsgemäß sind der hohle Faserkem und, falls vorhanden, auch Hohlräume des Fasermantels am Faserende offen gelassen und die beiden Faserenden jeweils mithilfe des Schutzelements abgedichtet. Das Schutzelement muss das Faserende in jedem Fall staubdicht abdichten, da Staubteilchen, die sich im Strahlungskegel nahe dem Faserende aufhalten, in Richtung der stärkeren Strahlungsfeldstärke und daher in den hohlen Faserkem hineingezogen werden können.

Um störende Fresnellreflexionen am Fenster des Schutzelements zu verhindern, ist das Fenster vorzugsweise beidseitig entspiegelt. Die Entspiegelung sollte für alle zu übertragenden Wellenlängen geeignet sein (z.B. für einen "Arbeitslaser" bei 1064 nm und einen "Pilotlaser" bei 630 nm). Vorteilhaft dichtet das Schutzelement das Faserende wasserdicht ab, um eine mögliche Betauung der Faser zu verhindern. Wenn Wasser auf die Faserendfläche gelangt, wird es sofort durch Kapillarwirkung in den hohlen Faserkem und die Hohlräume gezogen. Dies beeinträchtigt oder unterbindet die Funktion der Faser als Lichtleiter.

Besonders vorteilhaft dichtet das Schutzelement das Faserende luft- bzw. gasdicht ab, so dass die optische Faser dauerhaft mit speziellen Gasen gefüllt werden kann, um ihre Eigenschaften zu verändern. Beispielsweise kann Helium zur besseren Wärmeleitung oder SF₆ zur Erzielung einer höheren Feldstärke in der optischen Faser eingesetzt werden.

Alternativ ist eine Spülung der optischen Faser mit einem trockenen Gas sinnvoll, so dass mögliche Feuchtereste getrocknet werden. Eine Spülung mit Helium kann die Wärmeabfuhr aus dem Kernbereich der Faser deutlich verbessern. Das kann beim Einsatz von PCF-Fasern (= photonic crystal fiber) für Faserlaser Vorteile bringen. Wird eine Gasspülung verwendet, so weist vorteilhaft das Schutzelement einen Gaseinlass bzw. -auslass in Form einer Gehäuseöffnung auf, die in einen Zwischenraum zwischen Faserende und Fenster mündet. Dabei ist vorteilhaft die als Gasauslass verwendete Gehäuseöffnung mit einem keramischen Feinstfilter abgedeckt.

Bei der Ausführung des Schutzelementes sind keine Materialien zu verwenden, die ausgasen können, wie z.B. Kunststoffmaterialien mit Weichmachern, da sich die Ausgasprodukte im hohlen Faserkern der optischen Faser absetzen und das Lichtleitverhalten stören können.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine erste Ausführungsform der erfindungsgemäßen optischen Faser im Längsschnitt; und
- Fig. 2: eine zweite Ausführungsform der erfindungsgemäßen optischen Faser im Längsschnitt.

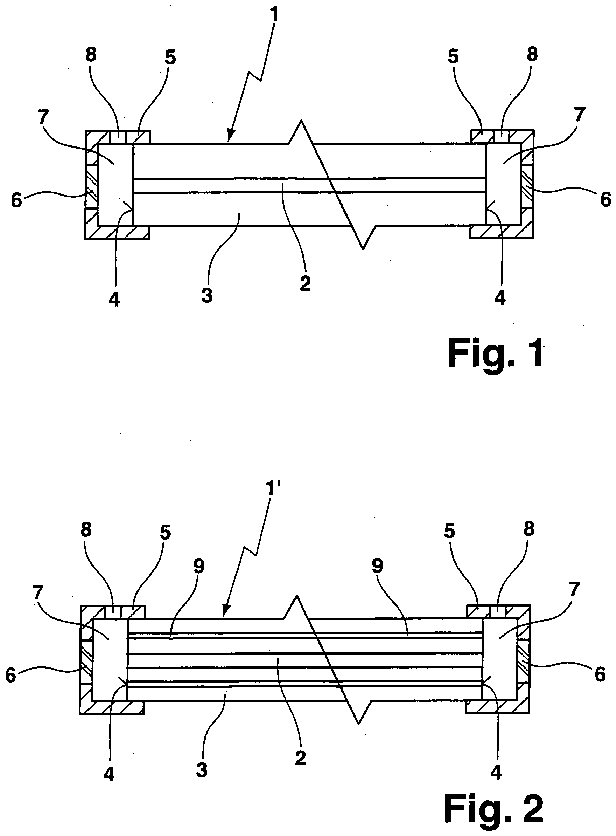

Die in **Fig. 1** gezeigte optische Faser **1** hat einen hohlen Faserkem **2** und einen äußeren Fasermantel **3** zur Führung des in den Faserkem **2** eingekoppelten Lichts. Der hohle Faserkem 2 ist an beiden Faserenden **4** stimseitig offen, wobei jedes Faserende 4 von einem kappenförmigen Schutzelement **5** staubdicht umgeben ist, welches stirnseitig vor dem Faserende 4 ein ebenes Fenster **6** zur Ein- und Auskopplung des durch den hohlen Faserkem 2 zu führenden Lichts aufweist. Das Schutzelement 5 besteht aus ausgasungsfreiem Material (z.B. aus Metall oder Glas) und dichtet das Faserende 4 luft- bzw. gasdicht ab. Das Fenster 6 ist ein- oder beidseitig entspiegelt und vom Faserende 4 im mm- bis cm-Bereich beabstandet, so dass zwischen Faserende 4 und Fenster 6 ein abgedichteter Zwischenraum **7** verbleibt. Das Fenster 6 besteht vorzugsweise aus Quarzglas. Zum Spülen des hohlen Faserkems 2 mit einem Spülgas weist jedes Schutzelement 5 einen Gaseinlass bzw. -auslass in Form einer Gehäuseöffnung **8** auf, die in den Zwischenraum 7 mündet. Bevorzugt ist die als Gasauslass verwendete Gehäuseöffnung 8 mit einem keramischen Feinstfilter (nicht gezeigt) abgedeckt.

Von der optischen Faser 1 unterscheidet sich die in **Fig. 2** gezeigte optische Faser **1'** allein dadurch, dass der Fasermantel 3 zur Führung des in den Faserkem 2 eingekoppelten Lichts Hohlräume **9** aufweist. Die im Bereich der Faserenden 4 befindlichen Hohlräume 9 sind stirnseitig offen und münden somit - wie auch der hohle Faserkem 2 - in den Zwischenraum 7.

## Patentansprüche

1. Optische Faser (1; 1') mit hohlem Faserkern (2), wobei der hohle Faserkern (2) an beiden Faserenden (4) stirnseitig offen ist, und zur Führung des in den Faserkern (2) eingekoppelten Lichts von einem Fasermantel (3) umgeben ist, der an jedem Faserende von einem kappenförmigen Schutzelement (5) staubdicht umgeben ist, welches unmittelbar auf dem Fasermantel (3) angebracht ist, und welches stirnseitig vor dem Faserende (4) ein Fenster (6) zur Ein- und Auskopplung des durch den hohlen Faserkem (2) zu führenden Lichts aufweist.

2. Optische Faser nach Anspruch 1, **dadurch gekennzeichnet, dass** der Fasermantel (3) stirnseitig offene Hohlräume (9) aufweist.

3. Optische Faser nach Anspruch 1 oder 2, **dadurch gekennzeichnet, dass** das Fenster (6) des Schutzelements (5) ein- oder beidseitig entspiegelt ist.

4. Optische Faser nach einem der vorhergehenden Ansprüche, **dadurch gekennzeichnet, dass** das Fenster (6) des Schutzelements (5) eben ist.

5. Optische Faser nach einem der vorhergehenden Ansprüche, **dadurch gekennzeichnet, dass** das Schutzelement (5) das Faserende (4) wasserdicht abdichtet.

6. Optische Faser nach einem der vorhergehenden Ansprüche, **dadurch gekennzeichnet, dass** das Schutzelement (5) das Faserende (4) luft- bzw. gasdicht abdichtet.

7. Optische Faser nach einem der vorhergehenden Ansprüche, **dadurch gekennzeichnet, dass** der hohle Faserkern (2) und, falls vorhanden, die stirnseitig offenen Hohlräume (9) des Fasermantels (3) mit Gas gefüllt sind.

8. Optische Faser nach einem der vorhergehenden Ansprüche, **dadurch gekennzeichnet, dass** das Schutzelement (5) eine Gehäuseöffnung (8) aufweist, die in einen Zwischenraum (7) zwischen Faserende (4) und Fenster (6) mündet.

9. Optische Faser nach einem der vorhergehenden Ansprüche, **dadurch gekennzeichnet, dass** das Schutzelement (5) aus ausgasungsfreiem Material besteht.

10. Optische Faser nach einem der vorhergehenden Ansprüche, **dadurch gekennzeichnet, dass** der Abstand zwischen Faserende (4) und Fenster (6) im mm- bis cm-Bereich liegt.

## Claims

1. Optical fiber (1; 1') comprising a hollow fiber core (2),
wherein the front faces of both fiber ends (4) of the hollow fiber core (2) are open, the hollow fiber core (2) is surrounded by a fiber cladding (3) for guiding the light coupled into the fiber core (2), each fiber end of the fiber cladding (3) being surrounded by a cap-shaped protection element (5) in a dustproof fashion, the protection element (5) being directly mounted on the fiber cladding (3) and having a window (6) at its front face in front of the fiber end (4) for coupling in and decoupling the light to be guided through the hollow fiber core (2).

2. Optical fiber according to claim 1, **characterized in that** the fiber cladding (3) has hollow spaces (9) which are open at the front faces.

3. Optical fiber according to claim 1 or 2, **characterized in that** the window (6) of the protection element (5) has an antireflection coating on one or both sides.

4. Optical fiber according to any one of the preceding claims, **characterized in that** the window (6) of the protection element (5) is flat.

5. Optical fiber according to any one of the preceding claims, **characterized in that** the protection element (5) seals the fiber end (4) in a waterproof fashion.

6. Optical fiber according to any one of the preceding claims, **characterized in that** the protection element (5) seals the fiber end (4) in an air-tight or gas-tight fashion.

7. Optical fiber according to any one of the preceding claims, **characterized in that** the hollow fiber core (2) and any existing hollow spaces (9) of the fiber cladding (3), which are open at their front faces, are filled with gas.

8. Optical fiber according to any one of the preceding claims, **characterized in that** the protection element (5) has a housing opening (8) which terminates in an intermediate space (7) between the fiber end (4) and the window (6).

9. Optical fiber according to any one of the preceding claims, **characterized in that** the protection element (5) consists of a material that does not gas out.

10. Optical fiber according to any one of the preceding claims, **characterized in that** the distance between the fiber end (4) and the window (6) is in the mm to cm range.

## Revendications

1. Fibre optique (1 ; 1') à noyau de fibre creux (2),
le noyau de fibre creux (2) étant ouvert frontalement aux deux extrémités de fibre (4) et entouré, pour le guidage de la lumière couplée dans le noyau de fibre (2), par une gaine de fibre (3) qui est entourée de façon étanche à la poussière par un élément de protection (5) en forme de capuchon à chaque extrémité de fibre (4), lequel présente frontalement, devant l'extrémité de fibre (4), une fenêtre (6) pour le couplage et le découplage de la lumière devant être guidée par le noyau de fibre creux (2).

2. Fibre optique selon la revendication 1, **caractérisée en ce que** la gaine de fibre (3) présente des cavités (9) ouvertes frontalement.

3. Fibre optique selon la revendication 1 ou 2, **caractérisée en ce que** la fenêtre (6) de l'élément de protection (5) est traitée antireflet d'un côté ou des deux côtés.

4. Fibre optique selon l'une des revendications précédentes, **caractérisée en ce que** la fenêtre (6) de l'élément de protection (5) est plane.

5. Fibre optique selon l'une des revendications précédentes, **caractérisée en ce que** l'élément de protection (5) rend l'extrémité de fibre (4) étanche à l'eau.

6. Fibre optique selon l'une des revendications précédentes, **caractérisée en ce que** l'élément de protection (5) rend l'extrémité de fibre (4) étanche à l'air et aux gaz.

7. Fibre optique selon l'une des revendications précédentes, **caractérisée en ce que** le noyau de fibre creux (2) et, le cas échéant, les cavités (9) ouvertes frontalement de la gaine de fibre (3) sont remplis de gaz.

8. Fibre optique selon l'une des revendications précédentes, **caractérisée en ce que** l'élément de protection (5) présente une ouverture de boîtier (8) qui débouche dans un espace intermédiaire (7) entre l'extrémité de fibre (4) et la fenêtre (6).

9. Fibre optique selon l'une des revendications précédentes, **caractérisée en ce que** l'élément de protection (5) est constitué d'un matériau ne dégageant pas de gaz.

10. Fibre optique selon l'une des revendications précédentes, **caractérisée en ce que** la distance entre l'extrémité de fibre (4) et la fenêtre (6) est de l'ordre du mm au cm.
